# EUROPEAN PATENT SPECIFICATION

(11) **EP 2 508 080 B1**
(45) Date of publication and mention of the grant of the patent: **20.05.2015**
(21) Application number: 12163031.3
(22) Date of filing: 03.04.2012
(51) Int. Cl.: A23G 9/04, A23G 9/20

(54) **Machine for the production of an edible semifreddo product or a product of a similar type, and method for loading a preparation into said machine.**
Maschine zur Herstellung eines essbaren halbgefrorenen Produkts, oder eines Produkts ähnlicher Art, und Verfahren zum Laden einer Zubereitung in die Maschine
Machine pour la production d'un produit semi-freddo comestible ou produit d'un type similaire et procédé de chargement d'une préparation dans ladite machine

(30) Priority: 04.04.2011 IT TO20110303
(43) Date of publication of application: 10.10.2012
(73) Proprietor: SOREMARTEC S.A., 2632 Findel (LU); Ferrero S.p.A., 12051 Alba (Cuneo) (IT); Ferrero Offene Handelsgesellschaft m.b.H., 35260 Stadtallendorf (DE)
(72) Inventor: Spallazzo, Gianpiero, 13040 Sali Vercellese (Vercelli) (IT)
(74) Representative: Frontoni, Stefano

(56) References cited:
- EP-A2- 2 082 649
- WO-A1-02/102170
- WO-A1-2004/075651
- FR-A- 852 342

## Description

The present invention relates to a machine for the production of an edible semifreddo product or a product of a similar type, as well as a method for loading a preparation into said machine.

In general, a machine of this type comprises:
- a container in which to introduce a preparation;
- a loading arrangement comprising an opening for introducing the preparation into the container;
- stirring means arranged so that they can turn within the container and designed to mix the preparation introduced into the container;
- cooling means designed to cool the inside of the container; and
- means for dispensing the edible product from the container.

An example of such a machine is described in the documents No. US6058721 and No. WO2004/075651.

The loading method of conventional machines of the type referred to above envisages providing containers containing the liquid or powder preparation and pouring the preparation, in the desired amount, directly into the container of the machine. For this purpose, the container of the machine has an opening through which to pour the preparation, which can be closed via a removable lid.

The present applicant proposes to solve a series of problems linked to said type of loading method.

First of all, it should be noted that said machines, given that they find widespread use in public premises (such as bars, restaurants, kiosks, etc.), are mostly used by staff who are in no way specialized in the production of the semifreddo product in question. In such a context there is consequently felt the need to limit as much as possible intervention on the preparation by persons who use said machines. In this connection, it may be noted how the loading method according to the prior art offers, instead, the user the possibility of altering said preparations by mixing them with other substances, in the respective containers in which said preparations are contained or else directly in the container of the machine.

Another problem is linked to the fact that provision of the preparation in the containers referred to above, comprising quantities for different uses of the machine, even though it reduces the costs for production and distribution of the preparation, leads to the risk of the containers, once opened, being preserved in conditions that are not suitable from the environmental standpoint (temperature, humidity, exposure to light, etc.) and/or from the hygienic standpoint, which, in addition to jeopardizing the quality of the finished product, can also constitute a danger for the consumer's health.

In addition, the present applicant seeks to guarantee that in the machine of the type in question only preparations coming from reliable manufacturers are used, for example from Ferrero production plants, that are able to guarantee high levels of quality of the product.

The present applicant has hence set himself the target of providing a machine of the type referred to at the start and a method for loading said machine that will enable a solution to at least one of the problems referred to above, and that, in general, may safeguard as much as possible the end consumer.

The above object is achieved via a machine according to Claim 1 and a method according to Claim 8.

In various embodiments, a sealed disposable cartridge is provided containing the preparation for the production of the finished edible product, and the machine has a loading arrangement comprising means designed to receive the aforesaid cartridge, means designed to tear said cartridge, and means designed to position said cartridge so as to enable pouring by gravity into the container, through the opening of the loading arrangement, of the preparation that comes out of the torn part of said cartridge. The preparation is preferably a liquid or in any case flowable substance, for example a substance in powder form.

In various embodiments, the cartridge is of the type comprising a container body containing the preparation and a tearable wall that closes said body.

As will be seen in greater detail in what follows, thanks to the method described herein the user simply has to set the cartridge on the loading arrangement of the machine and operate the latter to obtain pouring of the preparation and he is prevented from intervening in any way thereon.

As will be seen in what follows, in various embodiments, said method also envisages carrying out a check on the cartridge that is set on the loading arrangement and enabling operation of the machine only in the case where the cartridge is of an authorized type.

In various embodiments, the cartridges are provided with one or more control features, and the machine comprises checking means designed to enable operation of the machine only when said checking means detect the presence of the aforesaid one or more control features on the cartridge set on the loading arrangement.

The subject of the invention is also a system as claimed in Claims 9 to 11 and 13 to 15, and use of a cartridge as claimed in Claim 12.

The claims form an integral part of the technical teaching provided herein in relation to the invention.

The invention will now be described, purely by way of non-limiting example, with reference to the annexed drawings, in which:
- Figures 1 to 3 represent a machine of the type described herein, in different conditions;
- Figure 4 is a perspective view of an example of loading arrangement of the machine of Figure 1;

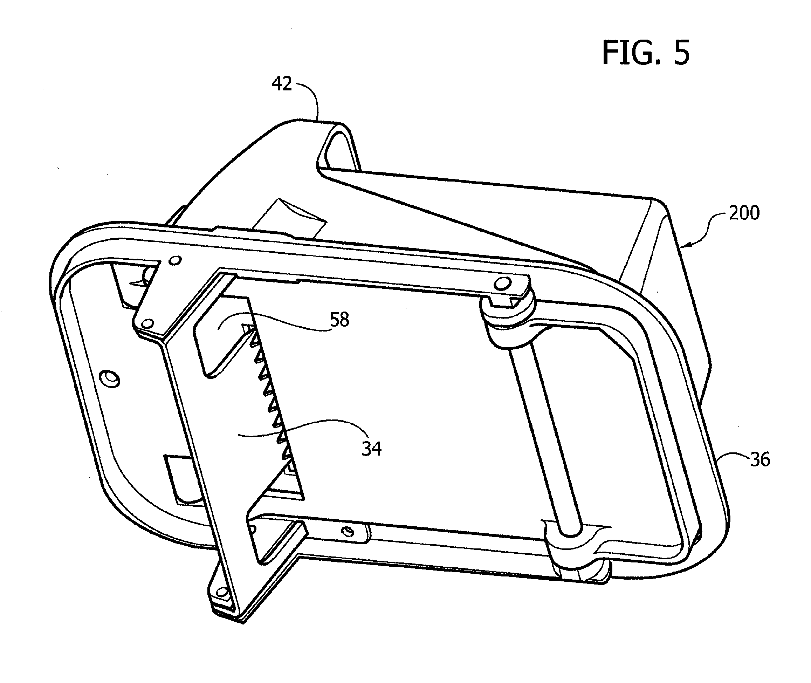

- Figure 5, is a perspective view from beneath of the arrangement of Figure 4;
- Figure 6 illustrates the loading arrangement of Figure 4 in a respective loading condition;
- Figure 7 is a cross-sectional view of the loading arrangement of Figure 4;
- Figure 8 is a cross-sectional view of the loading arrangement of Figure 6;

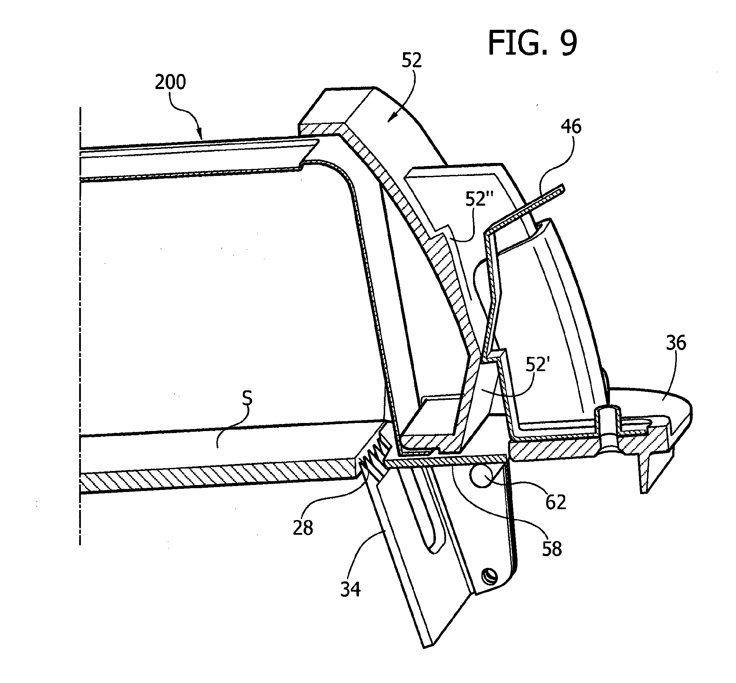

- Figure 9 is a cross-sectional view of a detail of Figure 4;

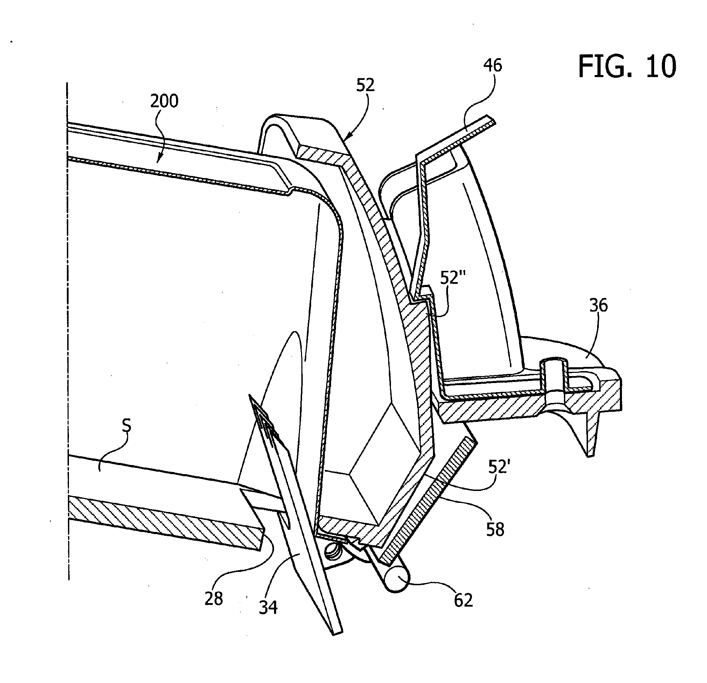

- Figure 10 is a cross-sectional view of a detail of Figure 6;
- Figure 11 is a perspective view of an example of cartridge; and
- Figure 12 illustrates a diagram of the checking means of the machine of Figure 1.

In the ensuing description various specific details are illustrated aimed at an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are only provided for convenience and hence do not define the sphere of protection or the scope of the embodiments.

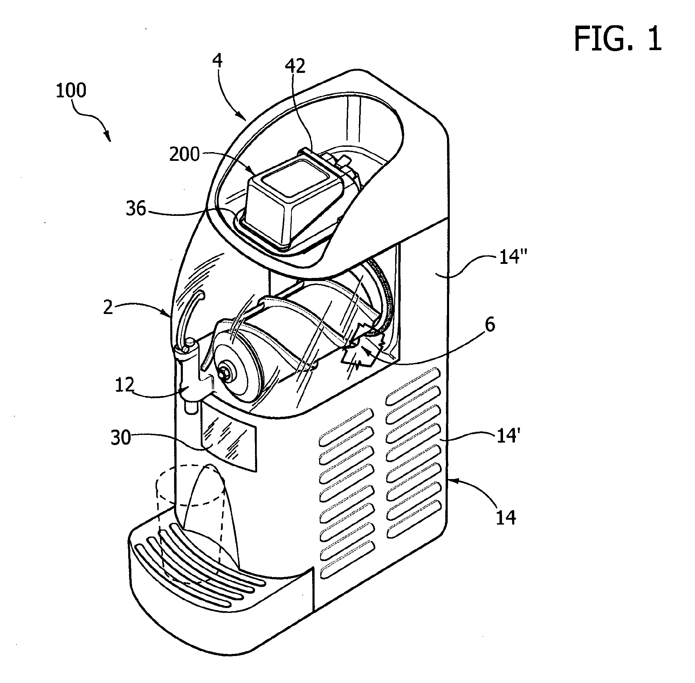

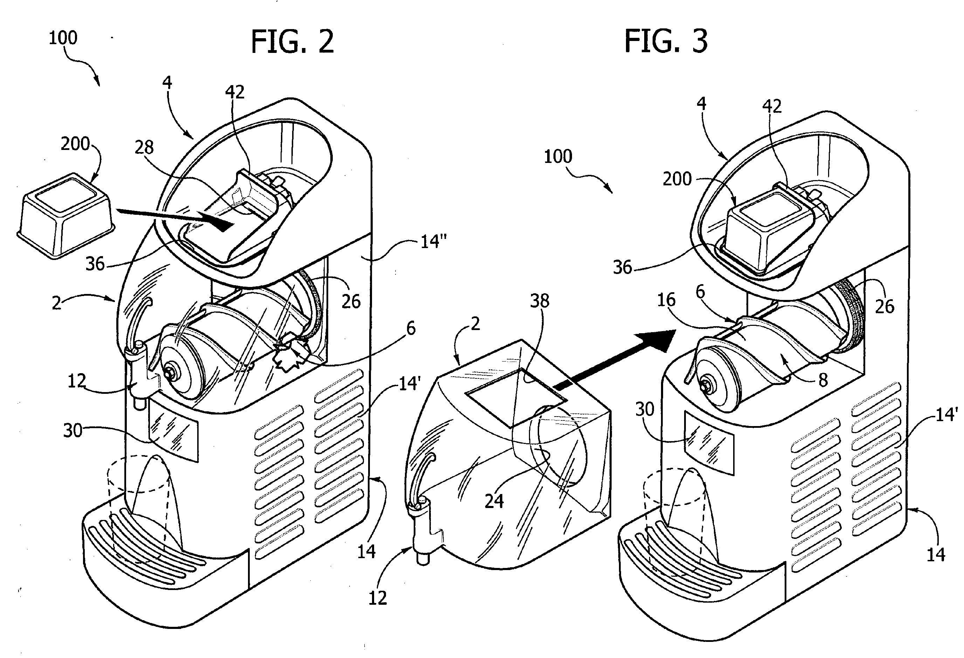

With reference to Figures 1 and 2, designated by the reference number 100 is a machine for the production of an edible semifreddo product or a product of a similar type, for example a frozen product.

The above type of machine is designed to treat a substantially liquid preparation to transform it into a cold or semifreddo product such as, for example, a mousse or else a granita.

Said machine comprises:
- a container 2 in which to introduce the preparation to be treated;
- a loading arrangement 4 having an opening via which to introduce the preparation within the container 2;
- stirring means 6 arranged so that they can turn in the container and designed to mix the preparation introduced into the container;
- cooling means 8 designed to cool the inside of the container; and
- means 12 for dispensing the edible product from the container 2.

The figures illustrate a specific embodiment of the machine in question. It should, however, be borne in mind that the teachings provided herein are valid also for machines of a type different from the one illustrated.

With reference to the figures, the machine is provided with a base structure 14, to which the container 2 is fixed in a removable way and on which the aforesaid stirring and cooling means are arranged.

The cooling means comprise a cooling cylinder 16, made of metal or of any other material with high thermal conduction, which encloses within it a portion of tubing (not illustrated) of a cooling circuit integrated in the base structure. Said cooling circuit can be of any conventional type suitable for conditioning, via the cooling cylinder 16, the preparation poured into the container 2, bringing it to temperatures lower than room temperature, preferably to temperatures below 0°C. For example, said circuit could present a conventional configuration, in which a pump, a lamination valve, and an evaporator are operatively connected together for conditioning the coolant that flows in the tubing of the circuit. In various embodiments, as in the one illustrated in the figures, the cooling cylinder is oriented in a substantially horizontal direction.

In various embodiments, the base structure 14 comprises a bottom casing portion 14', containing at least part of the cooling circuit, and a top portion 14" , which extends substantially vertically from said bottom portion. The portion 14" supports the cooling cylinder 16 and receives the tubing of the cooling circuit terminating in said cylinder.

The stirring means comprise a stirring element 6 designed to mix the contents of the container. In the case where the cooling means comprise the cooling cylinder 16, in various embodiments the stirring element has one or more blades of a helical shape, arranged coaxial to the cooling cylinder and rotating about the latter, and is carried by a shaft mounted rotatable on the top portion of the base structure. Said shaft is driven by a motor (not illustrated), for example an electric motor, contained in the portion 14' of the base structure and connected to said shaft via interposition of drive means, for example belt drive means or gear drive means, which from the portion 14' reach as far as the portion 14" of the base structure.

In various embodiments, the container 2, which is usually made of a transparent material with low thermal conduction (for example, plastic), is prearranged for being fixed to the base structure so as to interface its inside with the stirring means and the cooling means. For example, in the case where the cooling cylinder and the helical blades are provided, the container has an opening through which the cylinder and the blades can be inserted inside it. In various embodiments, such as in the one illustrated in the figures, said opening is defined by a cylindrical collar 24 designed to engage on a gasket 26 of a corresponding shape, which is carried by a base element on which the cooling cylinder is mounted.

In various embodiments, as in the one illustrated in the figures, the container also bears the aforesaid dispensing means 12, which may be of any type known in the art. In the example illustrated in the figures, said means comprise a tap formed by a cylinder that can slide, being operated by via a lever, between a lowered position, where it closes a hole provided on the bottom of the container, and a raised position, where the cylinder frees said hole and the product in the container can come out thanks to the thrust exerted by the mixing blades 6.

Operation of the above machine envisages a combined action of the cooling means and the stirring means to transform the preparation, which has been introduced into the container, into the semifreddo product referred to above. The machine 100 can have a control panel 30, for example a touch screen, via which it is possible to set the parameters of operation of said means.

The composition of the preparation and the way in which it is obtained are not described herein in detail in so far as they are not in themselves important for the teachings provided herein. In various embodiments, the preparation has a composition such that, as a result of the aforesaid combined action, it is transformed into a mousse.

As mentioned previously, the present applicant has provided an innovative method for loading said preparation into the machine of the type referred to above.

In various embodiments, said method envisages the use of a sealed disposable cartridge containing the preparation. In various embodiments, said cartridge comprises a container body containing the preparation and a tearable wall designed to close said container body. In various preferred embodiments, said cartridge contains an amount of preparation useful for the production of a number of portions of semifreddo product.

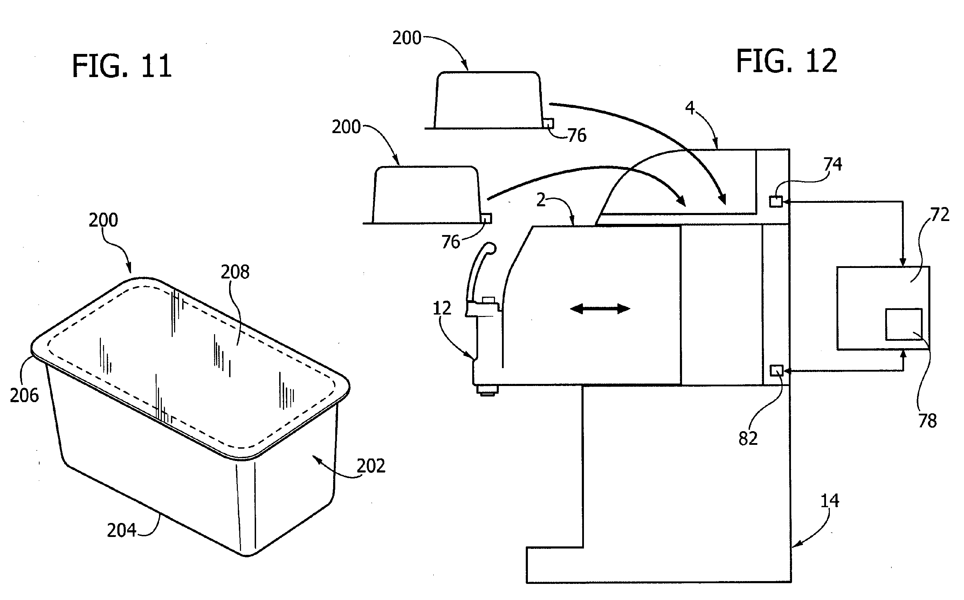

Illustrated in Figure 11 is an example of disposable cartridge for implementation of the method described herein, which is designated in the figures by the reference number 200. Preferably, the cartridge 200 comprises a container body 202, which has a predetermined shape defining a bottom 204 and a mouth part 206 opposite to the bottom 204. Said body is preferably made of a plastic material, for example polyethylene, polypropylene, or other plastic material for foodstuffs.

The cartridge 200 further comprises a tearable wall 208, preferably formed by a sealing lamina that closes the mouth part 206 of the container body 202; the lamina is fixed to the mouth part 206, for example via gluing or else via heat sealing. Said lamina is preferably made of a plastic material, for example a combined material of aluminium and polyethylene, polypropylene and polyethylene, or else any other metal or plastic material for foodstuffs.

In various embodiments, the machine 100 has a loading arrangement that is prearranged for operating on the aforesaid disposable cartridge.

In various embodiments, said loading arrangement has an opening 28 in communication with the inside of the container. Said loading arrangement has, moreover, positioning means 32, on which to set the cartridge, and tearing means 34 designed to tear the cartridge. The positioning means are designed to receive the cartridge and to position it (i.e., define a position of the cartridge received by said positioning means) in a loading position such as to enable pouring by gravity into the container, through the opening 28, of the preparation that comes out of the torn part of the cartridge.

In various embodiments, as in the one illustrated, the positioning means 32 are designed to position the cartridge in a loading positions such that the tearable wall of the cartridge faces downwards and is inclined so as to present a raised region and a lowered region, whilst, in a corresponding way, the tearing means 34 are prearranged to act on the lowered region of said wall.

In various embodiments, as in the one illustrated, the positioning means are switchable between a receiving condition, in which to receive said cartridge, and a loading condition, in which the cartridge is positioned in the aforesaid loading position. In various embodiments, as in the one illustrated, the tearing means comprise one or more tearing elements arranged fixed with respect to the positioning means in a position such that switching of the positioning means from the receiving condition to the loading condition is designed to cause the action of the tearing means on the tearable wall of the cartridge set on the positioning means.

In various embodiments, as in the one illustrated, the positioning means comprise a supporting frame 36 mounted in a position corresponding to an opening 38 made on a top wall of the container. In various embodiments, said frame has a flange of an annular shape corresponding to the contour of the aforesaid opening 38, which is set in a position corresponding to the latter so as to cover the edges thereof from outside.

In various embodiments, as in the one illustrated, said positioning means moreover comprise a platform 42, designed to define a resting surface S of the cartridge, which is mounted rotatable on the frame, at the opening 38, between a first, raised, position and a second, lowered, position. In various embodiments, as in the one illustrated, the resting surface S defined by the platform is prearranged so as to receive the mouth portion 206 of the cartridge 200, illustrated in Figure 11.

The platform 42 can be actuated, in its movement of oscillation between the raised position and the lowered position referred to above, either manually or by control means purposely provided on the machine.

In various embodiments, as in the one illustrated, the positioning means comprise clamping means 44 designed to keep the platform in the aforesaid first and second positions. In particular, said clamping means comprise a metal tab 46 that is brought into engagement, via elastic means (not illustrated), with a transverse wall of the platform 52 so as to prevent the platform from falling as a result of the force of gravity. The transverse wall 52 occupies a distal region of the platform and has at least two distinct surfaces 52' and 52", which are prearranged for being engaged by said tab, and are designed to identify, respectively, the aforesaid first and second positions of the platform.

In various embodiments, as in the one illustrated, in the aforesaid raised position of the platform the resting surface S is oriented so as to facilitate positioning of the cartridge thereon by the person using the machine. In various embodiments, in the aforesaid raised position of the platform, the resting surface S is slightly raised or is in any case flush with the outer wall of the container on which the opening 38 is made.

In various embodiments, as in the one illustrated, in the aforesaid lowered position of the platform, the resting surface S identifies the aforesaid loading position, in which the cartridge finds itself with the tearable wall facing downwards and is inclined so as to present a raised region and a lowered region.

In various embodiments, as in the one illustrated, the platform 42 has a cross section in plan view that covers the entire cartridge, and has an opening designed to define the opening 28 of the loading arrangement, i.e., the opening through which the preparation that comes out of the torn cartridge is poured into the container. In various alternative embodiments, the platform 42 is instead shaped in such a way as to cover the cartridge only in part, leaving it exposed towards the inside of the container, and, in this case, the opening through which the preparation that comes out of the torn cartridge is poured into the container, namely the opening 28 of the loading arrangement, is defined by the opening 38 itself made on the wall of the container 2 or else by the opening of any covering element set in this region.

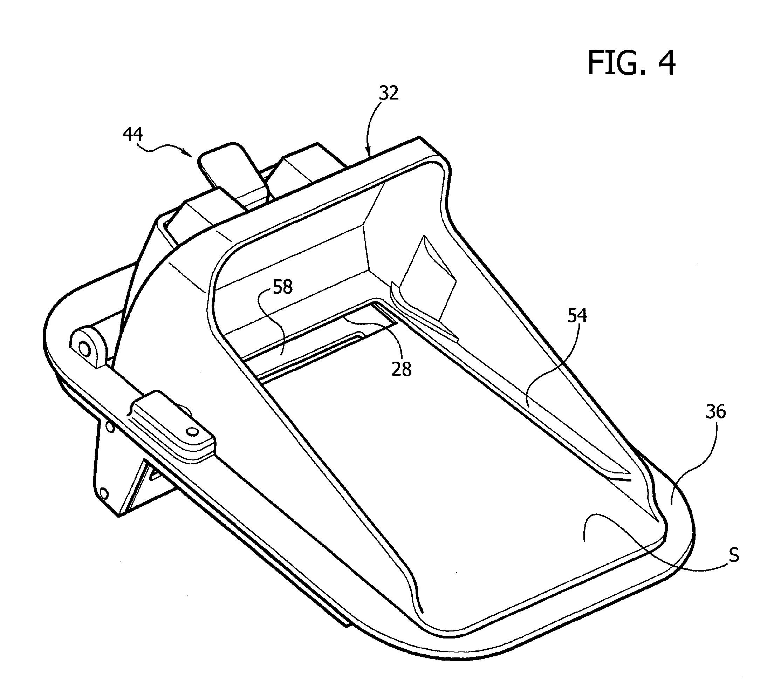

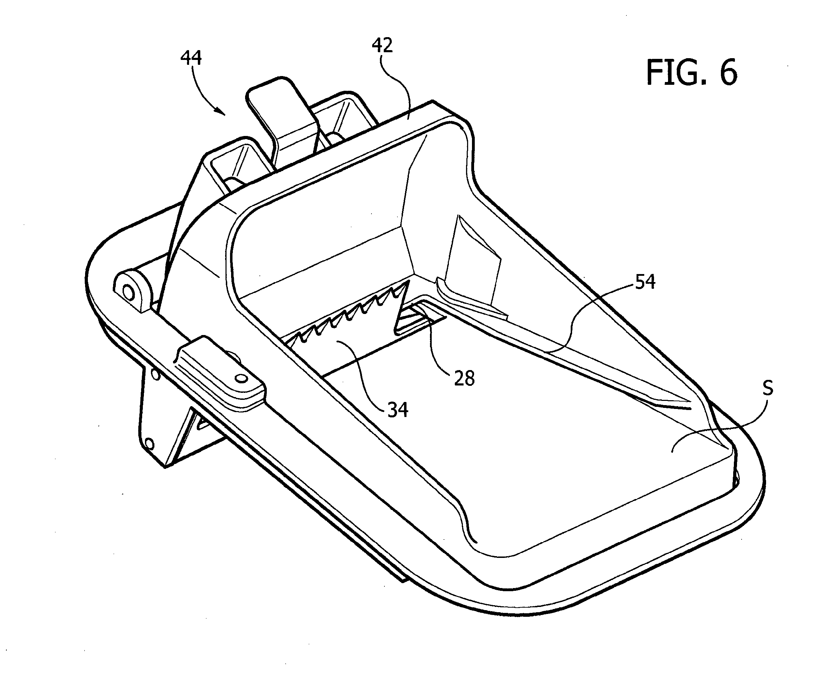

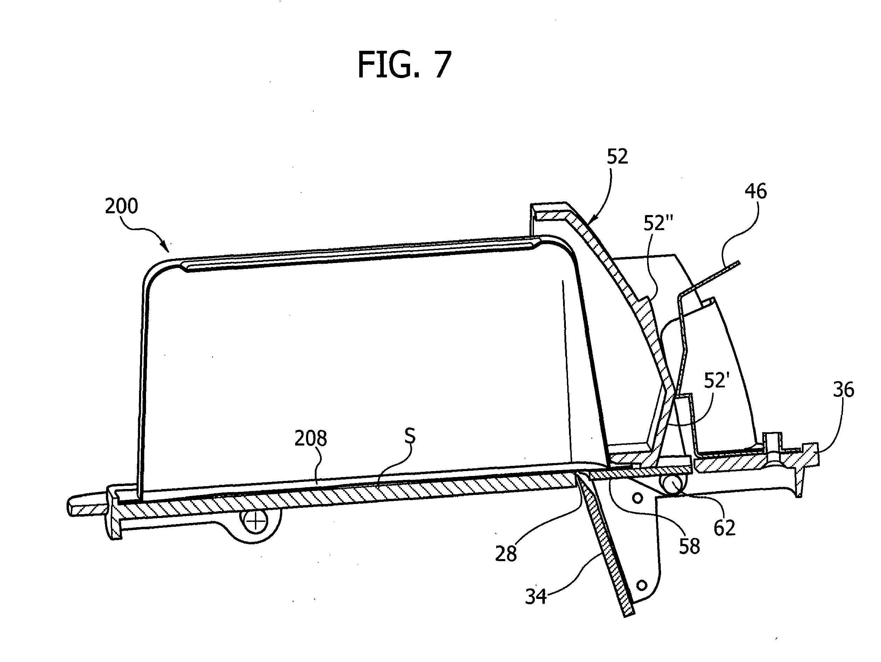

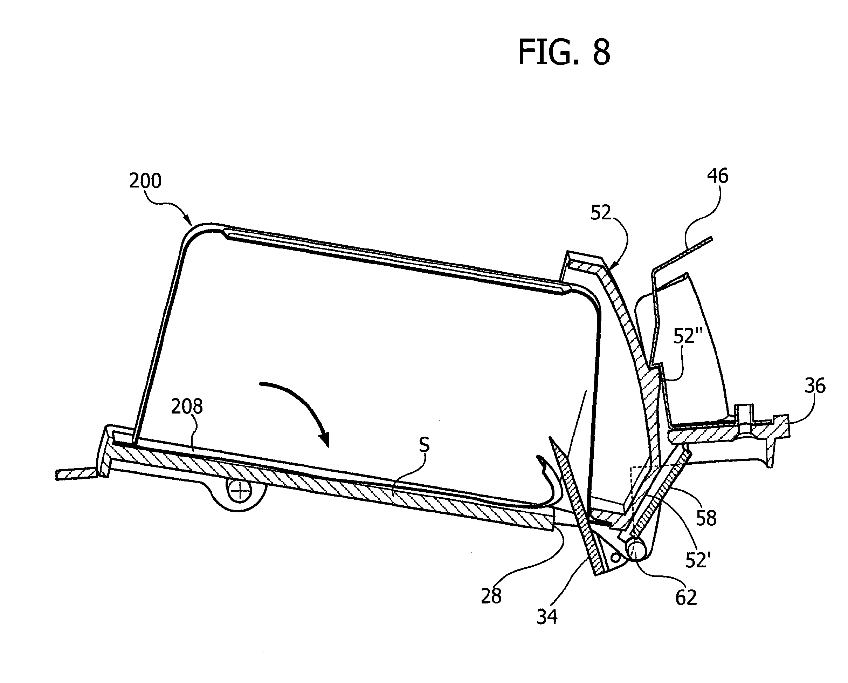

In various embodiments, as in the one illustrated, the tearing element 34 of the tearable wall of the cartridge is set fixed on the frame, underneath the platform and at the opening 28, in a position such that:
i) when the platform is in the raised position, said element is underneath the resting surface S (see Figures 4 and 7);
ii) during passage of the platform from said raised position to the lowered position, said element passes through the tearable wall of the cartridge set on the platform; and
iii), when the platform reaches the lowered position, said element is brought into a position where it is above said resting surface (see Figures 6 and 8).

In alternative embodiments, the tearing element could instead be mounted mobile on the frame for being actuated against the tearable wall of the cartridge. Said element could be actuated either manually, for example via a control lever connected to the tearing element, or via control means purposely provided on the machine.

It is clear that the tearing means must tear the cartridge preventing the latter from generating a vacuum that might hinder exit of the preparation. In various embodiments, the tearing means envisage a cutting element that, prior to tearing proper of the cartridge, creates an opening on the cartridge designed to favour inlet of air into the cartridge. In any case, the tearing means must be designed to create a tear or an opening on the cartridge that is sufficiently large to guarantee exit of all the preparation.

In various embodiments, the platform has, for example on the resting surface S defined thereby, guides or contrast edges 54 designed to withhold the cartridge in position against the action, which would tend to displace it upwards, exerted by the tearing element 34. The longitudinal edges of the portion 206 of the cartridge are inserted under the guides 54.

In various embodiments, the loading arrangement comprises means 58 for closing the opening 28, which can be activated between a first position, in which they close said opening, and a second position, in which they open a passage between the inside of the container and the cartridge set on the positioning means.

In the case where the positioning means are switchable between a receiving condition and a loading condition, in various embodiments the closing means are prearranged in such a way that switching of the positioning means from the receiving condition to the loading condition causes passage of the closing means from their first position to their second position.

In the case where the positioning means comprise the platform 32, in various embodiments, as in the one illustrated, this comprises a base side (which could be the same element of the platform as the one that defines the resting surface S), which, in the raised position of the platform, occludes substantially altogether the opening 38 (or in other cases the opening of the covering element set thereon). In various embodiments, as in the one illustrated, the closing means referred to above comprise a tab 58 mounted on the frame 36 within the opening 38 (or the opening of the covering element), in a position abutting and underlying the platform so as to be able to close the opening 28 made on the platform and render the inside of the container inaccessible through said opening.

In alternative embodiments, the platform 32 does not occlude the opening 38 altogether, and does not cover the entire cartridge but leaves exposed a part thereof towards the inside of the container. In this case, the tab 58 of the closing means bears upon the platform 42 for closing, together with the latter, the opening 28, which, as already mentioned previously, in this case is defined by the opening 38 itself of the container (or else in other cases by the opening of any covering element set on the latter).

The tab 58 is mounted on the frame so as to be able to oscillate between a raised position and a lowered position, being driven by the platform 42 itself in such a way that, when this is in its raised position, the tab is positioned, accordingly, in its respective raised position, in which it closes the opening 28, whereas, when the platform is in its lowered position, the tab is also in its corresponding respective lowered position, determining the passage between the inside of the container and the tearable wall of the cartridge set on the platform. In various embodiments, when they are in the raised position, provided between the tab and the platform is a slit designed to enable the tearing element 34 to intervene on the tearable wall, or else, alternatively, the tab is designed to cover also the region of the cartridge on which the tearing element is designed to intervene, and its movement is co-ordinated so as to free said region in time to enable the tearing element to intervene on said region during displacement of the platform.

In various embodiments (not illustrated), the tab is rigidly connected to a gearwheel, which is rotatably mounted on the frame and is engaged by a corresponding portion of the platform in such a way that oscillation of the latter causes rotation of said portion of gear and hence a corresponding oscillation by the tab. From what has been said above, the mutual engagement between the platform and said portion of gear is such that to the raised position of the platform there corresponds the raised position of the tab and, accordingly, to the lowered position of the platform there corresponds the lowered position of the tab.

In alternative embodiments, as in the one illustrated, the platform 42 has pins 62 projecting laterally, rigidly connected thereto, on which side edges of the tab 58 rest and slide to enable the tab to follow the movement of the platform from the raised position to the lowered position and vice versa in such a way that to the raised position of the platform there corresponds the raised position of the tab and, accordingly, to the lowered position of the platform there corresponds the lowered position of the tab.

In alternative embodiments, the tab could also be governed in a way independent of the platform via purposely provided control means.

Operation of the loading arrangement described above envisages that the cartridge is set on the platform, when this is in its raised position, and that the platform is then brought into its lowered position. Passage from the raised position to the lowered position causes intervention of the tearing element on the tearable wall of the cartridge and at the same time, as a result of the simultaneous displacement of the tab, creation of a passage between the torn wall of the cartridge and the inside of the container, via which the preparation contained in the cartridge can be poured by gravity into the container.

It is clear that the loading arrangement 4 can present also configurations that differ from the ones described above. For example, the platform could be mounted fixed on the frame 36, and the tearing means could comprise a tearing element mobile between an inoperative position, far from the platform, and an operative position, in which the cartridge set on the platform is penetrated by said element. In this case, the platform could be mounted either inclined or in a substantially horizontal arrangement. Moreover, in various embodiments, the closing means could comprise a tab designed to close the opening 28 of the loading arrangement to render the inside of the container inaccessible. The tab could be mounted so as to be able to oscillate between a raised position, in which it closes said opening, and a lowered position, in which it determines the passage between the inside of the container and the cartridge set on the platform.

As mentioned previously, in various embodiments the method described herein moreover envisages carrying out a check on the cartridges that are positioned on the loading arrangement, which enables pouring only of the contents of authorized cartridges into the container.

In various embodiments, the aforesaid check is either of a mechanical type or of an electronic type.

In various embodiments, a first type of mechanical check envisages a conformation of the positioning means such as to enable arrangement on these only of cartridges having predefined geometrical characteristics. For example, the platform described above can present side edges designed to identify a predefined width and/or shape of the space for receiving the cartridges so that the cartridges that can be arranged on the platform are only the cartridges that have a compatible width and/or shape.

In the case where the positioning means comprise the oscillating platform, a second type of mechanical control envisages clamping elements that prevent the platform, when it is in its raised position of reception, from being lowered. Said clamping elements can be deactivated only as a result of the engagement with a cartridge having given geometrical characteristics. For example, said elements can be formed by two tabs (not illustrated) carried by the frame 36, which, when the platform is in its raised position, project respectively at the opposite sides of the platform so as to interfere with the latter and prevent the platform from being lowered. Said tabs are prearranged for being deactivated only as a result of an action, by the cartridge, designed to move them away from one another so as to release the platform from them. The cartridge must hence present opposite edges or sides (for example, opposite edges of the mouth portion of the cartridge) that are at an appropriate distance apart to be able to exert such an action.

As regards the check of an electronic type (see Figure 11), in various embodiments the machine comprises a control unit 72, and reading means 74 configured for reading information 76 (for example, a code) identifying the cartridge 200 that is set on the loading arrangement. Preferably, said information is carried by the cartridge itself, and the reading means are arranged in the vicinity of the loading arrangement 4.

Said reading means are operatively connected to the control unit of the machine and are designed to generate a signal representing the information read. It should be noted that said reading means can be of any type suitable for the purposes referred to. For example, said means can be an optical sensor, an RFID-tag reader or else a magnetic-code reader.

In one embodiment, the control unit is configured for enabling operation of the machine according to the signal received by the reading means. For example, in one embodiment, the control unit is configured for comparing the information identifying the cartridge received by the reading means with a reference enable code and for enabling operation of the machine for a given matching between the information and said code.

In this way, the use of non-original cartridges, which do not have identifying information or have identifying information of a non-authorized type, is prevented.

In various embodiments, the control unit is configured for preventing operation of the machine with a cartridge that has already been used.

In various embodiments, each cartridge has unique identifying information, and the control unit is configured for storing in a memory 78 codes representing the identifying information detected by the reading means for the cartridges already used, and preventing operation of the machine when the reading means detect one of the codes already stored. However, in this case, the same cartridge already used in one machine could in any case be used in another machine on which it has not yet been used.

To prevent this drawback, in one embodiment, the cartridge can present writable means, such as for example a memory or a simple fuse, which is to be altered when the cartridge is used in order to alter the information identifying the cartridge (i.e., the information designed to enable operation of the machine) or in any case prevent this from possibly being read by the reading means in the subsequent attempts to use the cartridge itself. Consequently, the control unit of any machine on which a cartridge already used previously were set would not be able to read the information identifying the cartridge and would hence prevent operation of the machine. For example, in one embodiment, the cartridge has a fuse that is burnt at the end of reading of the code in order to prevent any further readings, or else has a memory that contains the information identifying the cartridge, and the control unit is configured for altering or erasing the contents of said memory.

In general, alteration of the writable means is obtained as a result of the interaction between the control unit (or the reading means) and the cartridge, during or at the end of detection of the information identifying the cartridge itself.

Furthermore, in various embodiments, the control unit is configured for signalling the need for an intervention of cleaning of the container when a given time interval elapses. In one embodiment, the control unit is configured for interrupting the action of signalling following upon an intervention on the machine by the user such as, for example, pressing a control pushbutton provided on the machine. In various embodiments, the information regarding the aforesaid time interval is carried by the cartridge itself.

In various embodiments, the machine comprises a sensor 82 for detecting the presence of the container on the machine, said sensor being operatively connected to the control unit and being designed to generate a signal after the container has been removed from the machine. The control unit is configured for disabling operation of the machine when the aforesaid time interval elapses and subsequently enabling the machine only after it has received the signal from the aforesaid sensor. In this way, to be able to re-enable the machine the user is forced to remove the container to wash it. In the case where the container is removed before the aforesaid time interval elapses, the control unit is configured for starting counting of said time interval all over again, starting from when the container is put back in position.

However, in the embodiment referred to above, there exists the possibility that, to annul disabling imposed by the control unit, the user might remove and immediately after reposition the container on the machine. In order to overcome said drawback, in various embodiments, re-enabling of the machine occurs only when the container removed is reset on the machine after a minimum pre-set time, which is chosen on the basis of an estimated time necessary for carrying out an adequate operation of cleaning of the container. In one embodiment, the control unit is configured for detecting the time between removal of the container and its being reset in position and comparing said time with the aforesaid minimum time interval, and re-enabling the machine when the time detected is greater than the pre-set one. For this purpose, the sensor referred to above is, for example, configured for generating a first signal when the container is removed and a second signal when the container is repositioned, and the control unit is configured for measuring the time that elapses between reception of the two signals.

In various embodiments, the control unit 72 comprises a wireless communication interface (not illustrated), for communication with a remote control centre. The wireless communication interface is preferably a mobile transceiver, such as for example a Global System for Mobile Communications, Universal Mobile Telecommunications System, High-Speed Packet Access, or Long Term Evolution modem. Communication with said remote control centre can be performed via an Internet connection or via messages of the Short Messaging Service type. In various embodiments, the communication interface is used for remote control of the machine; for example, the communication interface can be used to vary the operating parameters of the machine or update the control software thereof, or again, for querying the machine on its state of operation. In various embodiments, the control unit is configured for transmitting to the remote centre information regarding the state of the machine, after a pre-set time interval, or else when a state of malfunctioning is detected.

Of course, without prejudice to the principle of the invention, the details of construction and the embodiments may vary widely with respect to what has been described and illustrated herein purely by way of example, without thereby departing from the scope of the present invention. In this connection, it may be noted that the control method described above with reference to Figure 12, can be used also in machines different from the one illustrated above, for example in machines for dispensing an edible product that is not a semifreddo, such as for example a filling cream or other product of a similar type, either liquid or pasty. In general, it is possible to provide a system for dispensing such a product, which comprises:
- a sealed disposable cartridge containing said product or a preparation for the production of said product;
- a machine for dispensing said edible product, said machine comprising a container, a loading arrangement for introducing said preparation or product into said container, and means for dispensing said product from said container; wherein said loading arrangement comprises receiving means designed to receive said cartridge, and wherein:

said machine comprises a control unit and reading means operatively connected to the control unit, said reading means being configured for reading information identifying the cartridge that is set on the loading arrangement and generating a signal representing the information read,
wherein the control unit is configured for enabling operation of the machine according to the signal received by the reading means.

In various embodiments, the aforesaid machine for dispensing the edible product can be without the aforesaid stirring and/or cooling means.

In preferred embodiments, the control unit is configured for preventing operation of the machine with a cartridge that has been already used.

In further preferred embodiments, said control unit comprises a wireless communication interface, for communication with a remote control centre.

## Claims

1. A machine for the production of an edible semifreddo product or a product of a similar type, comprising:
- a container (2) into which to introduce a preparation;
- a loading arrangement (4) comprising an opening for introducing said preparation into said container;
- stirring means (6) arranged so that they can turn within said container and designed to mix the preparation introduced into the container;
- cooling means (16) designed to cool the inside of the container; and
- means for dispensing said product from said container;
said machine being **characterized in that** said loading arrangement comprises means (32) designed to receive a sealed disposable cartridge (200) containing said preparation, means (34) designed to tear said cartridge, and means (32) designed to position said cartridge so as to enable pouring by gravity into said container, through said opening (28), of the preparation that comes out of the torn part of said cartridge.

2. The machine according to Claim 1,
wherein said positioning means are designed to receive a cartridge of the type comprising a container body containing said preparation and a tearable wall that closes said body,
wherein said positioning means (32) are designed to position said cartridge in a loading position such that the tearable wall of the cartridge faces downwards and is inclined so as to present a raised region and a lowered region, and
wherein the tearing means (34) are designed to act on the lowered region of said wall.

3. The machine according to Claim 2, wherein the positioning means are switchable between a receiving condition in which to receive said cartridge and a loading condition in which the cartridge is positioned in said loading position.

4. The machine according to Claim 3, wherein the tearing means comprise one or more tearing elements (34) fixed with respect to the positioning means in a position such that switching of the positioning means from the receiving condition to the loading condition causes action of the tearing means on the tearable wall of the cartridge set on the positioning means.

5. The machine according to either Claim 3 or Claim 4, wherein said positioning means comprise a platform (42) designed to define a resting surface (S) for the cartridge, which is mounted rotatable between a first raised position, to which there corresponds the receiving condition of said positioning means, and a second lowered position, to which there corresponds the loading condition of said means.

6. The machine according to any one of Claims 1 to 5, wherein the loading arrangement comprises means (58) for closing said opening, which are activatable between a first position, in which they close said opening, and a second position, in which they open said opening and create a passage between the inside of the container and the cartridge set on the positioning means.

7. The machine according to Claim 6, wherein the positioning means comprise a platform (42), which is designed to define a resting surface for the cartridge, and wherein the closing means comprise a tab (58) designed to close said opening of said loading arrangement, which is mounted so as to be able to oscillate between a raised position, in which it closes said opening, and a lowered position, in which it determines a passage between the inside of the container and the cartridge set on the platform.

8. A method for loading a preparation into a machine according to any one of Claims 1 to 7, comprising the steps of:
- providing a sealed disposable cartridge (200) containing the preparation for the production of the semifreddo product;
- setting said cartridge on means of the loading arrangement of said machine designed to receive said cartridge;
- tearing said cartridge via tearing means of said loading arrangement; and
- positioning said cartridge so as to enable pouring by gravity into said container, through said opening (28), of the preparation that comes out of the torn part of said cartridge, wherein said step of positioning the cartridge is performed via positioning means of said loading arrangement.

9. A system for the production of an edible semifreddo product or a product of a similar type, comprising:
- a sealed disposable cartridge (200) containing a preparation for the production of said semifreddo product;
- a machine for the production of said edible product or a product of a similar type, according to any one of Claims 1 to 7.

10. The system according to Claim 9,
wherein said machine envisages a control unit (72) and reading means (74) operatively connected to the control unit, said reading means being configured for reading information (76) identifying the cartridge that is set on the loading arrangement and for generating a signal representing the information read, and
wherein the control unit is configured for enabling operation of the machine according to the signal received by the reading means.

11. The system according to Claim 10, wherein said control unit (72) is configured for preventing operation of the machine with a cartridge that has been already used.

12. Use of a sealed disposable cartridge in a method according to Claim 8 or in a system according to any one of Claims 9 to 11, said cartridge comprising a container body containing a preparation for the production of the edible semifreddo product, and a tearable wall designed to close said container body.

## Patentansprüche

1. Vorrichtung zum Herstellen eines essbaren halbgefrorenen Produkts oder eines Produkts eines ähnlichen Typs mit:
- einem Behälter (2), in den man eine Zubereitung einfüllen kann,
- einer Befüllanordnung (4) mit einer Öffnung zum Einführen der Zubereitung in den Behälter,
- einem Mischmittel (6), das so angeordnet ist, dass es sich innerhalb des Behälters drehen kann, und das dauz ausgestaltet ist, die Zubereitung, die in den Behälter eingeführt wurde, zu mischen,
- einem Kühlmittel (16), das dazu ausgestaltet ist, das Innere des Behälters zu kühlen, und
- einem Mittel zum Ausgeben des Produkts aus dem Behälter,
wobei die Vorrichtung **dadurch gekennzeichnet ist, dass** die Befüllanordnung ein Mittel (32), das dazu ausgestaltet ist, eine verschlossene wegwerfbare Kartusche (200) zu empfangen, die die Zubereitung enthält, ein Mittel (34), das dazu ausgestaltet ist, die Kartusche aufzureißen, und ein Mittel (32) aufweist, das dazu ausgestaltet ist, die Kartusche so zu positionieren, dass ein Gießen der Zubereitung, die aus dem aufgerissenen Teil der Kartusche herauskommt, durch die Schwerkraft durch die Öffnung (28) in den Behälter ermöglicht wird.

2. Maschine nach Anspruch 1,
bei der das Positionierungsmittel dazu ausgestaltet ist, eine Kartusche des Typs mit einem Behälterkörper, der die Zubereitung enthält, und einer aufreißbaren Wand, die den Körper verschließt, zu empfangen,
wobei das Positionierunsmittel (32) dazu ausgestaltet ist, die Kartusche in einer Befüllposition so zu positionieren, dass die aufreißbare Wand der Kartusche nach unten zeigt und sie so geneigt ist, dass sie einen angehobenen Bereich und einen abgesenkten Bereich bereitstellt, und
wobei das Aufreißmittel (34) dazu ausgestaltet ist, auf den abgesenkten Bereich der Wand einzuwirken.

3. Maschine nach Anspruch 2, bei der das Positionierungsmittel zwischen einem Empfangszustand, in dem es die Kartusche empfängt, und einem Befüllzustand, in dem die Kartusche in der Befüllposition positioniert ist, umschaltbar ist.

4. Maschine nach Anspruch 3, bei der das Aufreißmittel eines oder mehrere Aufreißelemente (34) aufweist, die bezüglich des Positionierungsmittels in einer Position so befestigt sind, dass das Umschalten des Positionierungsmittels vom Empfangszustand zum Befüllzustand eine Einwirkung des Aufreißmittels auf die aufreißbare Wand der Kartusche verursacht, die auf das Positionierungsmittel gestellt ist.

5. Maschine nach Anspruch 3 oder Anspruch 4, bei der das Positionierungsmittel eine Plattform (42) aufweist, die dazu ausgestaltet ist, eine Ruheoberfläche (S) für die Kartusche zu bilden, die zwischen einer ersten angehobenen Position, welche dem Empfangszustand des Positionierungsmittels entspricht, und einer abgesenkten Position schwenkbar angebracht ist, welche dem Befüllzustand des Mittels entspricht.

6. Maschine nach einem der Ansprüche 1 bis 5, bei der die Befüllanordnung ein Mittel (58) zum Verschließen der Öffnung aufweist, welches zwischen einer ersten Position, in der es die Öffnung verschließt, und einer zweiten Position aktivierbar ist, in der es die Öffnung öffnen und einen Durchgang zwischen dem Inneren des Behälters und der Kartusche, die auf das Positionierungsmittel gestellt ist, erzeugt.

7. Maschine nach Anspruch 6, bei der das Positionierungsmittel eine Plattform (42) aufweist, die dazu ausgestaltet ist, eine Ruheoberfläche für die Kartusche zu definieren, und wobei das Verschließmittel eine Lasche (58) aufweist, die dazu ausgestaltet ist, die Öffnung der Befüllanordnung zu verschließen, die so angebracht ist, das sie zwischen einer angehobenen Position, in der sie die Öffnung verschließt, und einer abgesenkten Position, in der sie einen Durchgang zwischen dem Inneren des Behälters und der Kartusche, die auf die Plattform gestellt ist, bestimmt, schwenken kann.

8. Verfahren zum Füllen einer Zubereitung in eine Maschine nach Anspruch 1 bis 7 mit den Schritten des:
- Bereitstellens einer verschlossenen wegwerfbaren Kartusche (200), die die Zubereitung für das Herstellen eines halbgefrorenen Produkts enthält,
- Stellens der Kartusche auf ein Mittel der Befüllanordnung der Maschine, das dazu ausgestaltet ist, die Kartusche zu empfangen,
- Aufreißens der Kartusche mittels eines Aufreißmittels der Befüllanordnung, und
- Positionierens der Kartusche, sodass ein Gießen der Zubereitung, die aus dem aufgerissenen Teil der Kartusche herauskommt, durch die Schwerkraft durch die Öffnung (28) in den Behälter ermöglicht wird, wobei der Schritt des Positionierens der Kartusche über ein Positionierungsmittel der Befüllanordnung durchgeführt wird.

9. System zum Herstellen eines essbaren halbgefrorenen Produkts oder eines Produkts eines ähnlichen Typs mit:
- einer verschlossenen wegwerfbaren Kartusche (200), die eine Zubereitung für das Herstellen des halbgefrorenen Produkts aufweist,
- einer Maschine zum Herstellen des essbaren Produkts oder eines Produkts von einem ähnlichen Typ nach einem der Ansprüche 1 bis 7.

10. System nach Anspruch 9,
wobei die Maschine eine Steuerungseinheit (72) und ein Auslesemittel (74) vorsieht, das operativ mit der Steuerungseinheit verbunden ist, wobei das Auslesemittel dazu ausgestaltet ist, eine Information (76), welche die Kartusche identifiziert, die auf die Befüllanordnung gestellt ist, zu identifizieren und ein Signal, welches die gelesene Information wiedergibt, zu erzeugen, und
wobei die Steuerungseinheit dazu ausgestaltet ist, einen Betrieb der Maschine gemäß dem Signal, das durch das Auslesemittel empfangen wurde, zu ermöglichen.

11. System nach Anspruch 10, bei dem die Steuerungseinheit (72) dazu ausgestaltet ist, einen Betrieb der Maschine mit einer Kartusche, die bereits benutzt wurde, zu verhindern.

12. Verwendung einer verschlossenen wegwerfbaren Kartusche in einem Verfahren nach Anspruch 8 oder einem System nach einem der Ansprüche 9 bis 11, wobei die Kartusche einen Behälterkörper, der eine Zubereitung für das Herstellen eines essbaren halbgefrorenen Produkts enthält, und eine aufreißbare Wand aufweist, die dazu ausgestaltet ist, den Behälterkörper zu verschließen.

## Revendications

1. Machine pour la production d'un produit semi-glacé comestible ou d'un produit de type similaire, comprenant :
- un récipient (2) dans lequel une préparation est introduite ;
- un agencement de chargement (4) comprenant une ouverture permettant d'introduire ladite préparation dans ledit récipient ;
- des moyens d'agitation (6) agencés de sorte qu'ils puissent tourner à l'intérieur dudit récipient et conçus pour mélanger la préparation introduite dans le récipient ;
- des moyens de refroidissement (16) conçus pour refroidir la partie interne du récipient ; et
- des moyens de distribution dudit produit à partir dudit récipient ;
ladite machine étant **caractérisée en ce que** ledit agencement de chargement comprend des moyens (32) conçus pour recevoir une cartouche jetable scellée (200) contenant ladite préparation, des moyens (34) conçus pour déchirer ladite cartouche, et des moyens (32) conçus pour positionner ladite cartouche de manière à permettre de verser par gravité dans ledit récipient, à travers ladite ouverture (28), la préparation qui sort de la partie déchirée de ladite cartouche.

2. Machine selon la revendication 1,
dans laquelle lesdits moyens de positionnement sont conçus pour recevoir une cartouche du type comprenant un corps de récipient contenant ladite préparation et une paroi pouvant être déchirée qui ferme ledit corps,
dans laquelle lesdits moyens de positionnement (32) sont conçus pour positionner ladite cartouche dans une position de chargement de sorte que la paroi pouvant être déchirée de la cartouche soit orientée vers le bas et soit inclinée de manière à présenter une zone surélevée et une zone abaissée, et
dans laquelle les moyens de déchirement (34) sont conçus pour agir sur la zone abaissée de ladite paroi.

3. Machine selon la revendication 2, dans laquelle les moyens de positionnement peuvent être commutés entre un état de réception dans lequel ladite cartouche est reçue et un état de chargement dans lequel la cartouche est positionnée dans ladite position de chargement.

4. Machine selon la revendication 3, dans laquelle les moyens de déchirement comprennent un ou plusieurs élément(s) de déchirement (34) fixé(s) par rapport aux moyens de positionnement dans une position telle que la commutation des moyens de positionnement de l'état de réception vers l'état de chargement provoque une action des moyens de déchirement sur la paroi pouvant être déchirée de la cartouche placée sur les moyens de positionnement.

5. Machine selon la revendication 3 ou 4, dans laquelle lesdits moyens de positionnement comprennent une plate-forme (42) conçue pour définir une surface d'appui (S) pour la cartouche, qui est montée en rotation entre une première position surélevée, à laquelle correspond l'état de réception desdits moyens de positionnement, et une deuxième position abaissée, à laquelle correspond l'état de chargement desdits moyens.

6. Machine selon l'une quelconque des revendications 1 à 5, dans laquelle l'agencement de chargement comprend des moyens (58) pour fermer ladite ouverture, qui peuvent être actionnés entre une première position, dans laquelle ils ferment ladite ouverture, et une deuxième position, dans laquelle, ils ouvrent ladite ouverture et créent un passage entre la partie interne du récipient et la cartouche placée sur les moyens de positionnement.

7. Machine selon la revendication 6, dans laquelle les moyens de positionnement comprennent une plate-forme (42), qui est conçue pour définir une surface d'appui pour la cartouche, et où les moyens de fermeture comprennent une languette (58) conçue pour fermer ladite ouverture dudit agencement de chargement, qui est montée de façon à être apte à osciller entre une position surélevée, dans laquelle elle ferme ladite ouverture, et une position abaissée, dans laquelle elle détermine un passage entre la partie interne du récipient et la cartouche placée sur la plate-forme.

8. Procédé de chargement d'une préparation dans une machine selon l'une quelconque des revendications 1 à 7, comprenant les étapes consistant :
- à fournir une cartouche jetable scellée (200) contenant la préparation pour la production du produit semi-glacé ;
- à placer ladite cartouche sur des moyens de l'agencement de chargement de ladite machine conçus pour recevoir ladite cartouche ;
- à déchirer ladite cartouche par l'intermédiaire de moyens de déchirement dudit agencement de chargement ; et
- à positionner ladite cartouche de manière à permettre de verser par gravité dans ledit récipient, à travers ladite ouverture (28), la préparation qui sort de la partie déchirée de ladite cartouche, où ladite étape consistant à positionner la cartouche est effectuée par l'intermédiaire de moyens de positionnement dudit agencement de chargement.

9. Système pour la production d'un produit semi-glacé comestible ou d'un produit de type similaire, comprenant :
- une cartouche jetable scellée (200) contenant une préparation pour la production dudit produit semi-glacé ;
- une machine pour la production dudit produit comestible ou un produit de type similaire, selon l'une quelconque des revendications 1 à 7.

10. Système selon la revendication 9,
dans lequel ladite machine prévoit une unité de commande (72) et des moyens de lecture (74) reliés de manière opérationnelle à l'unité de commande, lesdits moyens de lecture étant configurés pour lire des informations (76) identifiant la cartouche qui est placée sur l'agencement de déchargement et pour générer un signal représentant les informations lues, et
dans lequel l'unité de commande est configurée pour permettre le fonctionnement de la machine selon le signal reçu par les moyens de lecture.

11. Système selon la revendication 10, dans lequel ladite unité de commande (72) est configurée pour empêcher le fonctionnement de la machine avec une cartouche qui a été déjà utilisée.

12. Utilisation d'une cartouche jetable scellée dans un procédé selon la revendication 8 ou dans un système selon l'une quelconque des revendications 9 à 11, ladite cartouche comprenant un corps de récipient contenant une préparation pour la production du produit semi-glacé comestible, et une paroi pouvant être déchirée conçue pour fermer ledit corps de récipient.
